# EUROPEAN PATENT SPECIFICATION

(11) **EP 0 592 533 B1**
(45) Date of publication and mention of the grant of the patent: **20.01.1999**
(21) Application number: 92914478.0
(22) Date of filing: 15.06.1992
(51) Int. Cl.: H04N 5/10

(54) **HORIZONTAL LINE COUNTER STABILIZATION IN A VIDEO RECEIVER**
STABILISIERUNG EINES HORIZONTALEN ZEILENZÄHLER IN EINEM VIDEOEMPFÄNGER
STABILISATION DU COMPTEUR DE LIGNES HORIZONTALES DANS UN RECEPTEUR VIDEO

(30) Priority: 02.07.1991 GB 9114248
(43) Date of publication of application: 20.04.1994
(73) Proprietor: THOMSON CONSUMER ELECTRONICS, INC., Indianapolis Indiana 46201 (US)
(72) Inventor: TULTS, Juri, Indianapolis, IN 46226 (US)
(74) Representative: Hartnack, Wolfgang, Dipl.-Ing.
(86) International application number: US9204826
(87) International publication number: WO9301681

(56) References cited:
- US-A- 4 160 993
- US-A- 4 170 026
- US-A- 4 198 651

## Description

### Field of the Invention

The present invention relates to detection of information that may be present in a video signal during vertical blanking intervals.

### Background of the Invention

A video signal typically includes vertical display intervals that comprise a plurality of horizontal line intervals, e.g. 525 lines per vertical interval in NTSC video systems. A portion of each vertical interval is usually designated as a vertical blanking interval. The vertical blanking interval may span a plurality of horizontal line intervals, e.g. in excess of 20 horizontal line intervals. The beginning of each vertical and horizontal interval is identified by respective vertical and horizontal sync pulses that are included in a composite video signal.

The content of the video signal during blanking intervals is usually not intended for display as part of the normal video image. The lack of image information in blanking intervals makes it possible to insert auxiliary information, e.g. teletext and closed caption data, into blanking intervals. The standards for each type of auxiliary information specify the positioning of the information within a vertical blanking interval. For example, the present closed captioning standard (see e.g., 47 CFR §§ 15.119 and 73.682) specifies that digital data corresponding to ASCII characters for closed captioning must be in line 21 of vertical blanking.

An approach to recovery of auxiliary information is to accurately identify a specific line interval, e.g. line 21, containing auxiliary information during a vertical blanking interval by counting horizontal sync pulses. For example, a horizontal line counter could be initialized by a vertical sync pulse and clocked by horizontal sync pulses. Ideally, the count value would then represent the line number. However, in a non-ideal environment, e.g. a television receiver chassis, the described simplistic line-counter approach may be unreliable. As an example, noise introduced by deflection circuits related to image display apparatus, e.g. a cathode ray tube (CRT), and temperature effects may produce varying timing relationships, e.g. time delays or jitter, between versions of horizontal and vertical sync that might be used to control a horizontal line counter. Jitter in combination with any delay between horizontal and vertical sync may introduce a critical race condition between initialization of a horizontal line counter by vertical sync and clocking of the line counter by horizontal sync. A critical race condition may cause the line count to be incorrect and unpredictable. For example, in one field the count value may correctly identify line 21 while in another field the count value may be 22 when line 21 is actually being received. Thus, the described approach may not reliably identify a particular horizontal line as desired for the purpose of extracting auxiliary data from a video signal.

The described potential for line count error is particularly significant in regard to closed caption decoders that are included internal to a television receiver. Set-top decoders are external to the receiver chassis and may not exhibit the above-described noise and temperature problems. Graphics systems, e.g. on-screen display (OSD), may involve line number identification. However, minor line count errors, such as the above-described error of 1, may produce only minor shifts of an OSD image, not data loss. Line count errors of 1 will result in a loss of closed caption data because the data appears during line 21 only. Frequent line count errors may produce an unacceptable degree of closed caption data loss.

### Summary of the Invention

The present invention is defined by the combination of features of appended claim 1.

In accordance with an aspect of the present invention, a horizontal line counter is cleared to indicate the beginning of a vertical interval by a reset signal derived from a vertical sync signal. The line counter is clocked by a signal at the horizontal sync rate that is derived from a harmonic of the horizontal sync signal. The relative phase shift between the reset and clock signals for the horizontal line counter is measured. The measured phase shift is used as an input to a variable phase shifter to adjust the phasing between the horizontal line counter control signals and the original sync signals. The phase adjustment advantageously decreases the sensitivity of the horizontal line counter to unstable phase shifts, e.g. jitter, between horizontal and vertical sync signals.

### Brief Description of the Drawing

Figure 1 shows in block diagram form an embodiment of the invention.

Figure 2 shows signal waveforms useful for understanding the operation of the embodiment in Figure 1.

Figure 3 shows a flow chart useful for understanding the operation of the embodiment in Figure 1.

Figure 4 shows a digital circuit implementation of the embodiment in Figure 1.

### Detailed Description of the Drawing

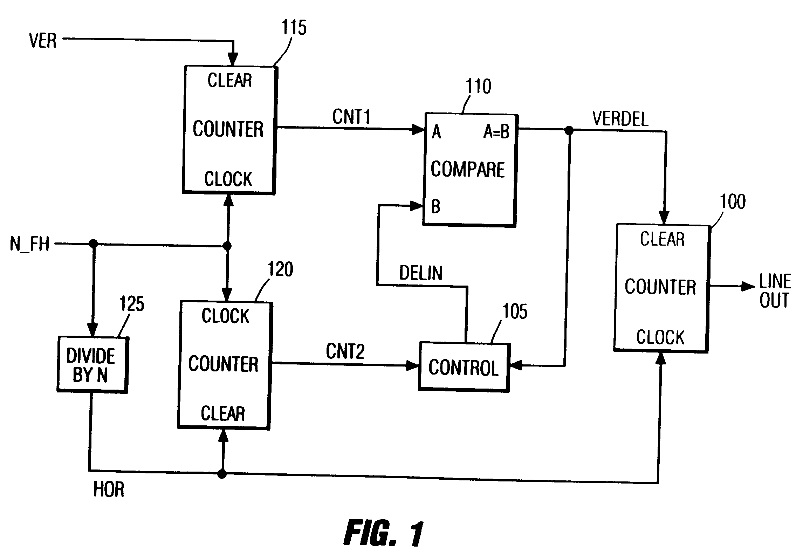

In Figure 1, vertical sync signal VER is coupled to the CLEAR input of counter 115 to clear or zero the value of counter 115 in response to the occurrence of a vertical sync pulse. Counter 115 is clocked by a harmonic N_FH of horizontal sync frequency FH where the "N" prefix in the designation N_FH indicates the particular harmonic of signal FH. For example, N may have a value of 16 indicating that the frequency of signal N_FH is 16 times that of horizontal sync frequency FH. Signal N_FH may be present in a video receiver in regard to other functions, e.g. on-screen display (OSD) or closed caption signal processing functions. Alternatively, signal N_FH might be generated from a crystal controlled signal source including a phase locked loop (PLL) that is locked to the horizontal frequency FH. The output of counter 115 is count value CNT1 that represents the number of cycles of signal N_FH that occur after a particular transition, e.g. logic 0 to logic 1, of signal VER.

Signal N_FH is divided by N in divider 125 to produce signal HOR having a frequency equal to that of horizontal sync. Signal HOR is coupled to the CLEAR input of counter 120 and to the clock input of horizontal line counter 100. Counter 120 is reset by signal HOR and clocked by signal N_FH to count upward from 0 to N, thus producing a count value CNT2 that represents the number of cycles of N_FH that occur after a pulse on signal HOR. As explained further below, count value CNT2 also represents the relative delay between signal HOR and signal VERDEL (a delayed version of signal VER).

Comparator 110 compares count value CNT1 with a delay value DELIN from control unit 105. The output of comparator 110 is signal VERDEL that indicates when CNT1 is equal to delay value DELIN. The occurrence of signal VERDEL indicates that the specified delay DELIN has elapsed after the occurrence of a pulse on signal VER and that counting of horizontal lines should begin. Thus, horizontal line counter 100 is initialized or cleared in response to signal VERDEL. Clocking for line counter 100 is provided by signal HOR.

Signal VERDEL is derived from vertical sync signal VER. Jitter on signal VER may cause corresponding variations in the time at which pulses on signal VERDEL occur with respect to pulses on signal HOR. If the edges of pulses on signals HOR and VER are closely aligned (near zero delay), a critical race condition may exist between the clock and clear inputs of line counter 100, signals HOR and VERDEL respectively. The critical race condition may undesirably permit jitter on signal VER to cause signal HOR to clock line counter 100 in an indeterminate manner. For example, the described critical race condition may result in a clock pulse to counter 100 that occurs either immediately before or immediately after the clearing of counter 100 by signal VERDEL. As a result, the line count may be incorrect and unpredictable.

However, signal VERDEL also causes control unit 105 to read count value CNT2 from counter 120. As described below, control unit 105 uses count value CNT2 to adjust delay value DELIN. The adjustment of delay value DELIN positions pulses on signal VERDEL with respect to pulses on signal HOR to decrease the sensitivity of horizontal line counter 100 to jitter in vertical sync signal VER. As a result, the reliability of line counter 100 is significantly improved.

Desirable values for delay value DELIN depend on the format of the video signal involved. Near zero delay between vertical and horizontal sync introduces the greatest potential for signal jitter to cause a critical race between signals VERDEL and HOR at the control inputs of the horizontal line counter. Delaying signal VERDEL by .5 times the horizontal line period would appear to place the greatest time spacing between the edges of signals VERDEL and HOR and minimize the possibility of a critical race. However, the timing between fields of video information in a video signal like an NTSC standard signal makes the choice of a .5 line period delay undesirable.

More specifically, an NTSC video signal includes two interlaced fields of video image data in each frame. Each field begins with vertical sync and includes 262.5 horizontal lines. Shifting signal VERDEL in field 1 by one-half line period with respect to signal HOR to minimize jitter insensitivity in field 1 would cause signal VERDEL in field 2 to have substantially zero delay with respect to signal HOR in field 2. As a result, a .5 line period delay could cause rather than prevent critical timing problems.

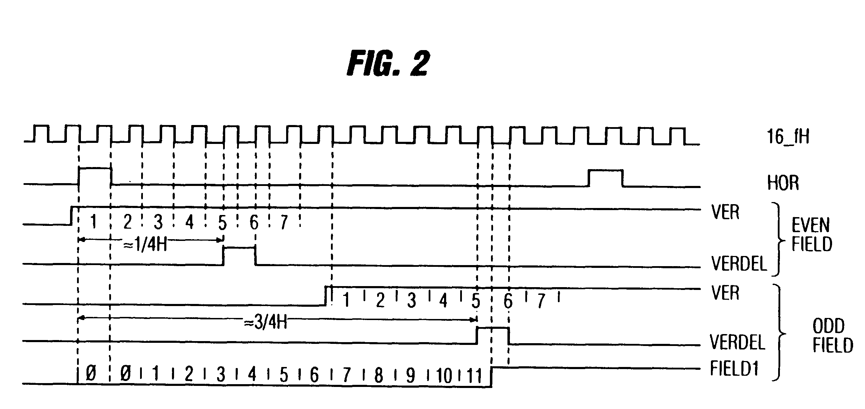

A desirable choice of delay between vertical and horizontal sync signals at the horizontal line counter inputs is .25 or .75 times the value of the horizontal line period. Selecting either of these values provides a spacing of .25 line period (16 us for NTSC) between signals VERDEL and HOR in both fields 1 and 2. This timing situation is shown in Figure 2.

As an example of the operation of the embodiment in Figure 1, consider the case of an NTSC video signal having horizontal line periods of approximately 64 us. The value of N may be chosen to be 16 as shown in Figure 2 resulting in 16 cycles of N_FH (each cycle having a period of 4 us) during each horizontal line interval. The choice of 16 as the value of N may be advantageous because counters 115 and 120 may then be selected to be common 4-bit digital counters. For N equal to 16, the desirable delay values of .25 or .75 times the horizontal period translate into 4 or 12 periods of signal N_FH.

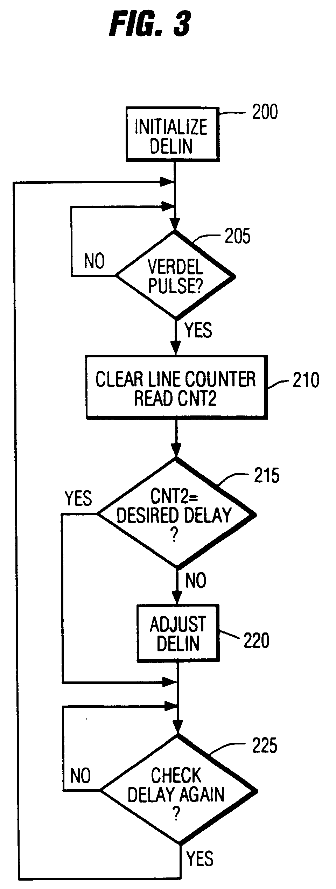

The flowchart in Figure 3 further explains the operation of the embodiment in Figure 1 and, in particular, the operation of control unit 105. At step 200 in Figure 3, control unit 105 initially establishes a low delay value DELIN, e.g. 4 us (a count of one). Control unit 105 then waits (step 205) for the occurrence of a transition, e.g. a transition from logic 0 to logic 1, on signal VERDEL indicating that count value CNT1 equals delay value DELIN. When count value CNT1 equals delay value DELIN, a delay equal to the period of N_FH times delay value DELIN has elapsed after an occurrence of a pulse on signal VER. The occurrence of a transition on signal VERDEL also clears horizontal line counter 100 and causes control unit 105 to read count value CNT2 (step 210). Count value CNT2 indicates the relative delay between pulses on signals HOR and VERDEL because: 1) both counters 115 and 120 are clocked by the same signal N_FH, 2) count value CNT2 is initialized when a pulse occurs on signal HOR, and 3) count value CNT2 is checked by control unit 105 when a pulse occurs on signal VERDEL. The delay indicated by count value CNT2 is in terms of the number of cycles of signal N_FH that have occurred since counter 120 was cleared by a pulse on signal HOR.

At step 215, control unit 105 compares the relative delay between signals VERDEL and HOR as indicated by count value CNT2 with a desired delay, e.g. 4 or 12 cycles of signal 16_FH. For example, count value CNT2 may be subtracted from a desired delay DELDES to produce a delay error DELTA1. Control unit 105 then adjusts (step 220) the value of delay value DELIN to more closely approximate the desired delay between signals HOR and VERDEL. The adjustment may be accomplished by, for example, adding the delay error DELTA1 to the present delay value DELIN to produce a new value for delay DELIN. The control operation then waits (step 225) until the delay value is to be checked again at which time the described operation is repeated. The delay value may be checked, for example, every field or less frequently.

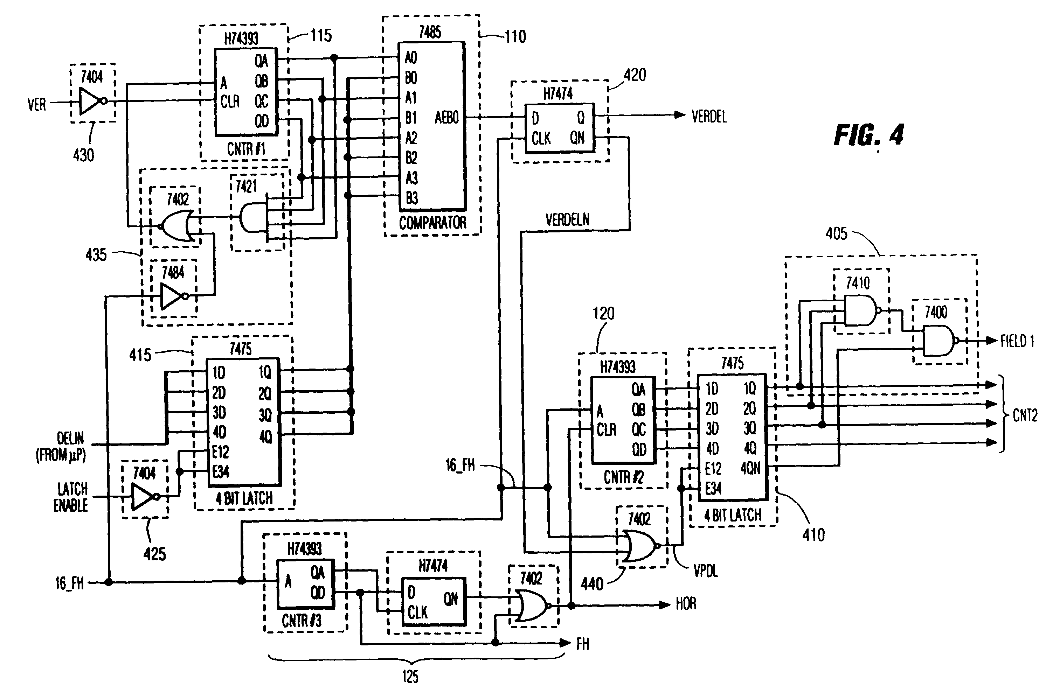

Figure 4 shows a detailed digital logic implementation of a section of the block diagram in Figure 1. Features of Figure 4 that correspond to those in Figure 1 have been given the same identifying numbers as in Figure 1. Although Figure 4 does not show control unit 105 and line counter 100 of Figure 1, Figure 4 does indicate that control unit 105 from Figure 1 may be a microprocessor or microcomputer. Also, Figure 4 shows exemplary embodiments for counters 115 and 120 and divider 125 in Figure 1. Figure 4 also indicates possible digital signal polarities for controlling the counter and comparison functions. Specifically, inverter 430 and register 420 modify signal polarities. A feature of Figure 4 that is not included in Figure 1 is field indicator circuit 405 that generates a signal indicating when the current field is field 1. Latch circuits 410 and 415 are controlled by signals from NOR gate 440 and inverter 425, respectively, to aid in interfacing with a microprocessor that may be performing the function of control unit 105 from Figure 1. Circuit 435 stops counter 115 when the maximum count value is reached to prevent the count value at the output of counter 115 from repetitively cycling through count values. Cycling of counter 115 would undesirably produce multiple transitions on signal VERDEL between pulses on signal VER.

The invention may also be useful in regard to video cassette recorders (VCR). A VCR may incorporate multiple read heads. Periodically, e.g. during vertical blanking, the VCR switches between read heads. The switching operation may introduce a timing transient error into the sync timing. The transient phase error may persist until the end of vertical blanking. In the vicinity of line 21, for example, the timing error may approach 10 µs. The invention may be used as described above to adjust the sync timing and compensate for VCR related phase transients to significantly improve line counter operation.

## Claims

1. Apparatus for processing a video signal having vertical and horizontal display intervals, each of said vertical display intervals including a plurality of said horizontal display intervals, said apparatus comprising:
means (115,125) for producing a first signal (CNT1) indicating a beginning of each of said vertical display intervals, and a second signal (HOR) indicating occurrence of said horizontal display intervals, said first signal exhibiting a first delay with respect to said second signal;
**characterized by:**
means (110) for delaying said first signal (CNT1) by a variable delay determined by a control signal (DELIN) to produce a delayed signal (VERDEL) exhibiting a second delay with respect to said second signal (HOR); and
means (105,120) responsive to said delayed signal (VERDEL) and to said second signal (HOR) for evaluating said delayed signal (VERDEL) exhibiting said second delay and for generating said control signal to change said second delay to a predetermined delay.

2. Video signal processing apparatus according to claim 1 further **characterized by:**
means (100) responsive to said delayed signal (VERDEL) and to said second signal (HOR) for counting said horizontal display intervals occurring during each of said vertical intervals;
said counting means (100) tending to count incorrectly when said second delay is in a predetermined range;
said second delay being subject to change in response to a change in said first delay; and
said predetermined delay substantially preventing said changes in said first delay from causing said second delay to be in said predetermined range.

3. Video signal processing apparatus according to Claim 1 or 2, further **characterized in that** said means (110) for delaying said first signal (CNT1) comprises
a comparator (110) having a first input (A) for receiving said first signal (CNT1), a second input (B) for receiving said control signal (DELIN), and an output (A=B) at which said delayed signal (VERDEL) is produced.

4. Video signal processing apparatus according to Claims 1 to 3, further **characterized in that** said means (105,120) for evaluating said second delay and for generating said control signal (DELIN) comprises a microcomputer (105).

5. Video signal processing apparatus according to Claims 1 to 4, further characterized in that said means (115, 120) for producing said first (CNT1) and second (HOR) signals comprises:
a counter (115) having a clock input (CLOCK) for receiving an input clock signal (N_FH) having a first characteristic frequency, a reset input (CLEAR) for receiving a vertical sync signal (VER) indicative of said beginning of each of said vertical display intervals, and an output for producing said first signal (CNT1); and
a frequency divider (125) having an input for receiving said input clock signal (N_FH) and an output for producing said second signal (HOR) having a second characteristic frequency equal to said first characteristic frequency divided by a factor N, said second characteristic frequency being substantially equal to a frequency of occurrence of said horizontal display intervals.

6. Video signal processing apparatus according to Claims 1 to 5, further **characterized in that** said means (105, 120) for evaluating said second delay and for generating said control signal (DELIN) comprises:
a counter (120) having a clock input (CLOCK) for receiving said input clock signal (N_FH), a reset input (CLEAR) for receiving said second signal (HOR), and an output for producing an intermediate signal (CNT2); and
a microcomputer (105) having a first input for receiving said intermediate signal (CNT2), a second input for receiving said delayed signal (VERDEL), and an output for producing said control signal (DELIN).

7. Video signal processing apparatus according to Claims 1 to 6, further **characterized in that** said predetermined delay is substantially equal to one-quarter of one of said horizontal display intervals.

8. Video signal processing apparatus according to Claims 1 to 6, wherein said predetermined delay is substantially equal to three-quarters of one of said horizontal display intervals.

## Patentansprüche

1. Vorrichtung zur Verarbeitung von Videosignalen mit Vertikal- und Horizontal-Anzeigeintervallen, wobei jedes Vertikal-Anzeigeintervall eine Vielzahl von Horizontal-Anzeigeintervallen enthält, umfassend:
Mittel (115, 125) zur Erzeugung eines ersten Signals (CNT1), das einen Beginn jedes der Vertikal-Anzeigeintervalle anzeigt, und eines zweiten Signals (HOR), das das Auftreten des Horizontal-Anzeigeintervalls angibt, wobei das erste Signal eine erste Verzögerung in bezug auf das zweite Signal aufweist; gekennzeichnet durch:
Mittel (110) zur Verzögerung des ersten Signals (CNT1) um eine veränderbare Verzögerung, die durch ein Steuersignal (DELIN) bestimmt wird, um ein verzögertes Signal (VERDEL) zu erzeugen, das eine zweite Verzögerung in bezug auf das zweite Signal (HOR) aufweist; und
Mittel (105, 120), die auf das verzögerte Signal (VERDEL) und auf das zweite Signal (HOR) ansprechen, um das verzögerte Signal (VERDEL), das die zweite Verzögerung aufweist, zu ermitteln und um das Steuersignal zu erzeugen und die zweite Verzögerung auf eine vorgegebene Verzögerung zu ändern.

2. Videosignal-Verarbeitungsvorrichtung nach Anspruch 1, gekennzeichnet durch:
Mittel (100), die auf das verzögerte Signal (VERDEL) und auf das zweite Signal (HOR) ansprechen, um die Horizontal-Anzeigeintervalle zu zählen, die während jedes Vertikal-Intervalls auftreten;
wobei die Zählmittel (100) bestrebt sind, fehlerhaft zu zählen, wenn sich die zweite Verzögerung in einem vorgegebenen Bereich befindet;
wobei die zweite Verzögerung einer Änderung in Abhängigkeit von einer Änderung der ersten Verzögerung unterworfen wird; und
wobei die vorgegebene Verzögerung im wesentlichen die Änderungen in der ersten Verzögerung daran hindert zu bewirken, daß die zweite Verzögerung sich in dem vorgegebenen Bereich befindet.

3. Videosignal-Verarbeitungsvorrichtung nach Anspruch 1 oder 2, dadurch gekennzeichnet, daß die Mittel (110) zur Verzögerung des ersten Signals (CNT1) umfassen:
einen Komparator (110) mit einem ersten Eingang (A) zum Empfang des ersten Signals (CNT1), einem zweiten Eingang (B) zum Empfang des Steuersignals (DELIN) und einem Ausgang (A=B), an dem das verzögerte Signal (VERDEL) erzeugt wird.

4. Videosignal-Verarbeitungsvorrichtung nach Anspruch 1 bis 3, dadurch gekennzeichnet, daß die Mittel (105, 120) zur Ermittlung der zweiten Verzögerung und zur Erzeugung des Steuersignals (DELIN) einen Mikrocomputer (105) umfassen.

5. Videosignal-Verarbeitungsvorrichtung nach Anspruch 1 bis 4, dadurch gekennzeichnet, daß die Mittel (115, 120) zur Erzeugung des ersten Signals (CNT1) und des zweiten Signals (HOR) umfassen:
einen Zähler (115) mit einem Takteingang (CLOCK) zum Empfang eines Eingangs-Taktsignals (N_FH) mit einer ersten charakteristischen Frequenz, einem Rückstelleingang (CLEAR) zum Empfang eines Vertikal-Synchronsignals (VER), das den Beginn jedes Vertikal-Anzeigeintervalls anzeigt, und einen Ausgang zur Erzeugung des ersten Signals (CNT1); und
einen Frequenzteiler (125) mit einem Eingang zum Empfang des Eingangs-Taktsignals (N_FH) und mit einem Ausgang zur Erzeugung des zweiten Signals (HOR), das eine zweite charakteristische Frequenz hat, die gleich der ersten charakteristischen Frequenz - geteilt durch einen Faktor N - ist, wobei die zweite charakteristische Frequenz im wesentlichen gleich einer Frequenz des Auftretens der Horizontal-Anzeigeintervalle ist.

6. Videosignal-Verarbeitungsvorrichtung nach Anspruch 1 bis 5, dadurch gekennzeichnet, daß die Mittel (105, 120) zur Ermittlung der zweiten Verzögerung und zum Erzeugen des Steuersignals (DELIN) umfassen:
einen Zähler (120) mit einem Takteingang (CLOCK) zum Empfang des Eingangs-Taktsignals (N_FH), mit einem Rückstelleingang (CLEAR) zum Empfang des zweiten Signals (HOR), und mit einem Ausgang zur Erzeugung eines Zwischensignals (CNT2); und
einen Mikrocomputer (105) mit einem ersten Eingang zum Empfang des Zwischensignals (CNT2), einem zweiten Eingang zum Empfang des verzögerten Signals (VERDEL), und mit einem Ausgang zur Erzeugung des Steuersignals (DELIN).

7. Videosignal-Verarbeitungsvorrichtung nach Anspruch 1 bis 6, dadurch gekennzeichnet, daß die vorgegebene Verzögerung im wesentlichen gleich einem Viertel eines der Horizontal-Anzeigeintervalle ist.

8. Videosignal-Verarbeitungsvorrichtung nach Anspruch 1 bis 6, bei der die vorgegebene Verzögerung im wesentlichen gleich drei Vierteln eines der Horizontal-Anzeigeintervalle ist.

## Revendications

1. Appareil pour le traitement d'un signal vidéo ayant des intervalles d'affichage verticaux et horizontaux, chacun des intervalles d'affichage verticaux comportant une pluralité d'intervalles d'affichage horizontaux, ledit appareil comprenant :
des moyens (115, 125) pour produire un premier signal (CNT1) indiquant le début de chacun des intervalles d'affichage verticaux, et un second signal (HOR) indiquant l'arrivée des intervalles d'affichage horizontaux, ledit premier signal présentant un premier retard par rapport au dit second signal ;
caractérisé par :
des moyens (110) pour retarder ledit premier signal (CNT1) d'un retard variable déterminé par un signal de commande (DELIN) pour produire un signal retardé (VERDEL) présentant un second retard par rapport au dit second signal (HOR); et
des moyens (105, 120) répondant au dit signal retardé (VERDEL) et au dit second signal (HOR) pour évaluer ledit signal retardé (VERDEL) présentant ledit second retard et pour générer ledit signal de commande pour modifier ledit second retard en un retard prédéterminé.

2. Un appareil de traitement d'un signal vidéo selon la revendication 1 caractérisé de plus par :
des moyens (100) répondant au dit signal retardé (VERDEL) et au dit second signal (HOR) pour compter lesdits intervalles d'affichage horizontaux se produisant durant chacun desdits intervalles verticaux ;
lesdits moyens de comptage (100) tendant à compter de manière incorrecte lorsque ledit second retard est dans une gamme prédéterminée ;
ledit second retard étant soumis à une modification en réponse à une modification dans ledit premier retard et ledit premier retard prédéterminé empêchant sensiblement lesdites modifications dans ledit premier retard d'amener ledit second retard à être dans une gamme prédéterminée.

3. Un appareil de traitement d'un signal vidéo selon la revendication 1 ou 2, caractérisé de plus en ce que lesdits moyens (110) pour retarder ledit premier signal (CNT1) comporte :
un comparateur (110) ayant une première entrée (A) pour recevoir ledit premier signal (CNT1), une seconde entrée (B) pour recevoir ledit signal de commande (DELIN), et une sortie (A=B) sur laquelle le signal retardé (VERDEL) est produit.

4. Un appareil de traitement d'un signal vidéo selon les revendications 1 à 3, caractérisé de plus en ce que lesdits moyens (105, 120) pour évaluer ledit second retard et pour générer ledit signal de commande (DELIN) comporte un microcalculateur (105).

5. Un appareil de traitement d'un signal vidéo selon les revendications 1 à 4, caractérisé de plus en ce que lesdits moyens (115, 120) pour produire lesdits premier (CNT1) et second (HOR) signaux comporte :
un compteur (115) ayant une entrée horloge (CLOCK) pour recevoir un signal d'horloge en entrée (N_FH) ayant une première fréquence caractéristique, une entrée remise à zéro (CLEAR) pour recevoir un signal de synchronisation vertical (VER) indiquant le début desdits intervalles d'affichage verticaux, et une sortie pour produire ledit premier signal (CNT1) ; et un diviseur de fréquence (125) ayant une entrée pour recevoir ledit signal d'horloge en entrée (N_FH) et une sortie pour produire ledit second signal (HOR) ayant une seconde fréquence caractéristique égale à ladite première fréquence caractéristique divisée par un facteur N, ladite seconde fréquence caractéristique étant sensiblement égale à la fréquence de production des intervalles d'affichage horizontaux.

6. Un appareil de traitement d'un signal vidéo selon les revendications 1 à 5, caractérisé de plus en ce que lesdits moyens (105, 120) pour évaluer ledit second retard et pour générer ledit signal de commande (DELIN) comporte :
un compteur (120) comportant une entrée horloge (CLOCK) pour recevoir ledit signal d'horloge en entrée (N_FH), une entrée de remise à zéro (CLEAR) pour recevoir ledit second signal (HOR), et une sortie pour produire un signal intermédiaire (CNT2); et
un microcalculateur (105) ayant une première entrée pour recevoir ledit signal intermédiaire (CNT2), une seconde entrée pour recevoir ledit signal retardé (VERDEL), et une sortie pour produire ledit signal de commande (DELIN).

7. Un appareil de traitement d'un signal vidéo selon les revendications 1 à 6, caractérisé de plus en ce que le retard prédéterminé est sensiblement égal à un quart d'un desdits intervalles d'affichage horizontaux.

8. Un appareil de traitement d'un signal vidéo selon les revendications 1 à 6, dans lequel ledit retard prédéterminé est sensiblement égal aux trois-quarts d'un desdits intervalles d'affichage horizontaux.
